(19) **Europäisches Patentamt**
**European Patent Office**
**Office européen des brevets**

(11) **EP 4 061 585 B1**

(12) **EUROPÄISCHE PATENTSCHRIFT**

(45) Veröffentlichungstag und Bekanntmachung des Hinweises auf die Patenterteilung:
**30.08.2023 Patentblatt 2023/35**

(21) Anmeldenummer: **20824084.6**

(22) Anmeldetag: **19.11.2020**

(51) Internationale Patentklassifikation (IPC):
**B25J 9/16** *(2006.01)*

(52) Gemeinsame Patentklassifikation (CPC):
**B25J 9/1633; B25J 9/1692;** G05B 2219/39343;
G05B 2219/39346; G05B 2219/40611;
G05B 2219/42039

(86) Internationale Anmeldenummer:
**PCT/EP2020/082659**

(87) Internationale Veröffentlichungsnummer:
**WO 2021/099452 (27.05.2021 Gazette 2021/21)**

(54) **KALIBRIERUNG EINER IMPENDANZREGELUNG EINES ROBOTERMANIPULATORS**

CALIBRATION OF AN IMPEDANCE CONTROL OF A ROBOT MANIPULATOR

ÉTALONNAGE D'UN RÉGLAGE D'IMPÉDANCE D'UN MANIPULATEUR DE ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.11.2019 DE 102019131401**

(43) Veröffentlichungstag der Anmeldung:
**28.09.2022 Patentblatt 2022/39**

(73) Patentinhaber: **Franka Emika GmbH**
**80797 München (DE)**

(72) Erfinder:
• **SPENNINGER, Andreas**
**85757 Karlsfeld (DE)**
• **MORGANTI, Marco**
**85748 Garching (DE)**

(74) Vertreter: **Rösler Rasch van der Heide & Partner**
**Bodenseestraße 18**
**81241 München (DE)**

(56) Entgegenhaltungen:
**EP-A1- 3 352 951      JP-A- 2004 223 663**

EP 4 061 585 B1

**Beschreibung**

Die Erfindung betrifft ein Verfahren zum Kalibrieren einer Impedanzregelung eines Robotermanipulators sowie ein Robotersystem mit einem Roboterarm und mit einer Steuereinheit zum Ausführen der kalibrierten Impedanzregelung. Impedanzregelungen von Robotermanipulatoren sind aus JP2004223663A und EP3352951A1 bekannt.

Aufgabe der Erfindung ist es, die Impedanzregelung eines Robotermanipulators bzw. eines Robotersystems zu verbessern.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Verfahren zum Kalibrieren einer Impedanzregelung eines Robotermanipulators, wobei der Robotermanipulator eine Vielzahl von durch Gelenke miteinander verbundenen Gliedern aufweist, aufweisend die Schritte:

- Auslenken eines Referenzpunktes des Robotermanipulators von einer Nulllage in eine ausgelenkte Lage, wobei der Robotermanipulator eine von einer Federkonstante der Impedanzregelung und von einer ersten ermittelten Auslenkung des Referenzpunktes des Robotermanipulators abhängige Gegenkraft aufbringt, wobei die erste ermittelte Auslenkung auf Basis von mittels Gelenkwinkelsensoren des Robotermanipulators erfassten Gelenkwinkeln ermittelt wird,
- Erfassen einer zweiten ermittelten Auslenkung des Referenzpunktes des Robotermanipulators in seiner ausgelenkten Lage mittels einer externen Positionsmesseinheit, und
- Anpassen der Federkonstante der Impedanzregelung so, dass die durch den Robotermanipulator aufgebrachte Gegenkraft einer vorgegebenen Gegenkraft des Robotermanipulators auf Basis der zweiten ermittelten Auslenkung entspricht.

Ob dabei im letzten Schritt des Verfahrens die Gegenkraft des Robotermanipulators auf Basis der zweiten ermittelten Auslenkung tatsächlich aufgebracht wird, ist dabei unerheblich, da die Kalibrierung der Impedanzregelung mit dem Anpassen der Federkonstante der Impedanzregelung abgeschlossen ist.

Die Impedanzregelung nimmt dabei bevorzugt die folgende Form ein:

$$u = -J^T(\theta)\left[K_x \widetilde{x}(\theta) + D_x \dot{x}(\theta)\right] + g(\theta) \text{ , wobei gilt: } \widetilde{x}(\theta) = f(\theta) - x_s$$

Hierin sind:

$\theta$ : die Gelenkwinkel des Robotermanipulators;
$u$ : die Gegenkraft des Robotermanipulators;
$J^T(\theta)$ : die transponierte Jacobimatrix, abhängig von den aktuellen Gelenkwinkeln;
$K_x$ : die Federkonstante;
$D_x$ : die Dämpfungskonstante;
$g(\theta)$ : eine Schwerkraftkompensation der Impedanzregelung;
$x$ : Die Auslenkung des Referenzpunktes des Robotermanipulators;
$\dot{x}$ : Die Geschwindigkeit des Referenzpunktes des Robotermanipulators;
$x_s$ : Die Nulllage des Referenzpunktes des Robotermanipulators;
$f(\theta)$ : Die ausgelenkte Lage des Referenzpunktes des Robotermanipulators;

Insbesondere dann, wenn keine Geschwindigkeit des Referenzpunktes vorliegt oder keine Dämpfungskonstante vorgesehen ist, und unter Vernachlässigung der Schwerkraft kann aus dem Term $u = -J^T(\theta)K_x\widetilde{x}$ durch entsprechende Umformung die angepasste Federkonstante auf Basis der zweiten ermittelten Auslenkung bestimmt werden.

Der Referenzpunkt des Robotermanipulators ist dabei insbesondere ein beliebiger und von einem Anwender auswählbarer Referenzpunkt des Robotermanipulators, das heißt, dass der Referenzpunkt körperfest an einem Glied oder einem Gelenk oder an einer anderen Komponente des Robotermanipulators gedacht angeordnet ist, oder sich zumindest mit dem Glied oder dem Gelenk oder der Komponente des Robotermanipulators körperfest mitbewegt.

Die externe Positionsmesseinheit unterscheidet sich von den Gelenkwinkelsensoren insbesondere dadurch, dass sie nicht am Robotermanipulator selbst angeordnet ist und nicht robotereigene Sensoren verwendet. Als Positionsmesseinheit wird stattdessen bevorzugt ein Bewegungserfassungssystem verwendet (sogenanntes "motion capture system"), bei dem Kameras vom Robotermanipulator oder von speziellen Markern am Robotermanipulator reflektiertes Licht erfassen und durch ihre entsprechende Eichung die Position des Referenzpunktes des Robotermanipulators im erdfesten Raum recht genau erfassen können. Alternativ bevorzugt wird eine andere Positionsmesseinheit verwendet, wobei eine Vielzahl möglicher bekannter Positionsmesseinheiten in Frage kommt, beispielsweise elektronische Messgeber, Ultraschall-Abstandsmesseinheiten, eine Radareinheit, Stereokameras, etc..

Die Gelenkwinkelsensoren des Robotermanipulators dagegen sind insbesondere robotereigene Sensoren, die einen jeweiligen Winkel zwischen zwei durch ein gemeinsames Gelenk miteinander verbundenen Gliedern des Robotermanipulators erfassen. Durch die Gesamtheit aller Gelenkwinkel kann durch entsprechende Koordinatensystemtransformationen bzw. Vektoralgebra oder alternativen mathematischen Methoden auf eine Position des Referenzpunktes des Robotermanipulators insbesondere gegenüber einem erdfesten Koordinatensystem geschlossen werden. Dabei entstehen naturgemäß gewisse Ungenauigkeiten, da einer oder mehrere der Gelenkwinkelsensoren Ungenauigkeiten oder Fehler aufweisen kann, die sich insbesondere in bestimmten Posen des Robotermanipulators und durch die Natur der Koordinatensystemtransformationen verstärken können.

Die Federkonstante der Impedanzregelung kann dabei eine skalare Federkonstante sein, oder aber eine Federkonstante in Matrixform, die sich insbesondere für die Auslenkung des Referenzpunktes des Robotermanipulators in verschiedene Richtungen unter Richtungsabhängigkeit der Federkonstante eignet. In letzterem Fall ist die Federkonstante bevorzugt eine Diagonalmatrix, aber auch Komponenten außerhalb der Diagonalen einer matrixförmigen Federkonstante sind möglich, insbesondere wenn Verkopplungen zwischen den ausgelegten Richtungen des Referenzpunktes des Robotermanipulators gewünscht werden. Die Nulllage des Referenzpunktes des Robotermanipulators ist dabei diejenige Position insbesondere gegenüber einem kartesischen erdfesten Koordinatensystem, in der der Robotermanipulator keine Gegenkraft erzeugt. Dies entspricht der Ruhelage einer realen mechanischen Feder, in der die mechanische Feder keinerlei Kraft erzeugt.

Erfindungsgemäß wird die Auslenkung des Referenzpunktes des Robotermanipulators gleichzeitig auf zwei Wegen durchgeführt: Zum einen über die robotereigenen Gelenkwinkelsensoren, zum anderen über die externe Positionsmesseinheit. Unter der Annahme, dass die externe Positionsmesseinheit mit ihren Messungen korrekt ist und nur die Gelenkwinkelsensoren oder zumindest einer davon fehlerbehaftet ist, kann mittels der zweiten ermittelten Auslenkung des Referenzpunktes des Robotermanipulators auch eine Gegenkraft bestimmt werden, die die Impedanzregelung auf Basis dieser zweiten ermittelten Auslenkung aufbringen müsste. Diese Gegenkraft wird von der tatsächlich aufgebrachten Gegenkraft etwas abweichen, da die Gelenkwinkelsensoren naturgemäß wegen Sensorrauschen, Koordinatensystemtransformation und anderer Effekte Gelenkwinkel ausgeben, die zu einer geringfügig anderen Position des Referenzpunktes in einem erdfesten kartesischen Koordinatensystem führen, als die ermittelte Position des Referenzpunktes des Robotermanipulators, die von der externen Positionsmesseinheit ausgegeben wird. Daher wird erfindungsgemäß die Federkonstante der Impedanzregelung so angepasst, dass die vom Robotermanipulator aufgebrachte Gegenkraft gegen die Auslenkung so groß ist oder wäre, als wäre die Impedanzregelung mit der ursprünglichen Federkonstante mit der zweiten ermittelten Position des Referenzpunktes des Robotermanipulators berechnet worden. Damit kompensiert erfindungsgemäß die Federkonstante den Messfehler der Gelenkwinkelsensoren anhand der Positionserfassung der externen Positionsmesseinheit.

Es ist eine vorteilhafte Wirkung der Erfindung, dass die Impedanzregelung entsprechend der Ungenauigkeiten und Fehler in der Messung von Gelenkwinkeln durch Gelenkwinkelsensoren des Robotermanipulators angepasst wird, und somit diese Ungenauigkeiten und Fehler im Betrieb eines Roboterarms bzw. Robotermanipulators unter Verwendung der kalibrierten Impedanzregelung ausgeglichen werden.

Gemäß einer vorteilhaften Ausführungsform wird nach dem Auslenken des Referenzpunktes des Robotermanipulators von der Nulllage in die ausgelenkte Lage der Referenzpunkt des Robotermanipulators in der ausgelenkten Lage gehalten und das Erfassen der zweiten ermittelten Auslenkung erfolgt während des Haltens des Referenzpunktes des Robotermanipulators in der ausgelenkten Lage, wobei das Anpassen der Federkonstante der Impedanzregelung so erfolgt, dass die durch den Robotermanipulator aufgebrachte Gegenkraft einer stationären Gegenkraft des Robotermanipulators auf Basis der zweiten Auslenkung entspricht. Insbesondere dann, wenn in der Impedanzregelung nicht nur eine künstliche Feder in Form einer Federkonstanten enthalten ist, sondern auch eine Dämpfungskonstante, die eine geschwindigkeitsabhängige Gegenkraft gegen die Bewegung des Referenzpunktes des Robotermanipulators erzeugt, wird mit dieser Ausführungsform sichergestellt, dass nur die Federkonstante abhängig von der zweiten ermittelten Auslenkung angeglichen wird, und Geschwindigkeitseinflüsse durch das Wirken der Dämpfungskonstante keine Wirkung auf die Anpassung der Federkonstante der Impedanzregelung haben.

Gemäß einer weiteren vorteilhaften Ausführungsform weist das Verfahren weiterhin die Schritte auf:

- Ermitteln einer Geschwindigkeit des Referenzpunktes des Robotermanipulators an zumindest einem Ort der Auslenkung mittels einer externen Geschwindigkeitsmesseinheit, und
- Anpassen einer Dämpfungskonstante der Impedanzregelung so, dass die durch den Robotermanipulator aufgebrachte Gegenkraft einer vorgegebenen Gegenkraft des Robotermanipulators auf Basis der zweiten ermittelten Auslenkung und auf Basis der ermittelten Geschwindigkeit entspricht.

Im Gegensatz zur vorhergehenden Ausführungsform werden bei dieser Ausführungsform explizit Geschwindigkeiten des Referenzpunktes des Robotermanipulators berücksichtigt. Dabei wird vorteilhaft zumindest eine Geschwindigkeit an einem Ort während der Auslenkung des Referenzpunktes aus seiner Nulllage in seine ausgelenkte Lage ermittelt bzw. erfasst und zusätzlich zur aktuellen Auslenkung berücksichtigt. Die Geschwindigkeitsmesseinheit kann dabei ein Teil der Positionsmesseinheit sein und aus der zeitlichen Ableitung von gemessenen Positionen ermittelt werden.

Gemäß einer weiteren vorteilhaften Ausführungsform ist die Federkonstante über die Auslenkung des Referenzpunktes zwischen seiner Nulllage und seiner ausgelenkten Lage konstant. Gemäß dieser Ausführungsform ist die Federkonstante zeitlich invariant, das heißt, insbesondere über die Auslenkung des Referenzpunktes des Robotermanipulators unveränderlich. Dies erzeugt eine lineare künstliche Feder für den Referenzpunkt des Robotermanipulators.

Gemäß einer weiteren vorteilhaften Ausführungsform ist die Federkonstante von der aktuellen Auslenkung des Referenzpunktes des Robotermanipulators abhängig. Im Gegensatz zur vorhergehenden Ausführungsform weist hierbei die Impedanzregelung durch die auslenkungsabhängige Federkonstante ein nichtlineares Federgesetz auf. Dies ist insbesondere dann vorteilhaft einsetzbar, wenn für bestimmte Anwendungen eine nichtlineare Impedanzregelung gewünscht ist. Vorteilhaft wird das Verfahren gemäß dem ersten Aspekt der Erfindung oder den zugehörigen Ausführungsformen für mehrere Positionen des Referenzpunktes des Robotermanipulators als Nulllage im Raum wiederholt, um mehrere Stützpunkte für die Anpassung der Federkonstante zu erhalten, und somit die Nichtlinearität der künstlichen Feder in der Impedanzregelung zu berücksichtigen.

Gemäß einer weiteren vorteilhaften Ausführungsform erfolgt das Anpassen der Federkonstante der Impedanzregelung in Modalkoordinaten. Die Modalkoordinatentransformation transformiert die Differenzialgleichung der Impedanzregelung unter anderem abhängig von einer Trägheitsmatrix der Impedanzregelung, sodass eine gekoppelte Dynamik der Impedanzregelung über verschiedene Richtungen der Auslenkung durch entsprechende Transformation entkoppelt wird und in Modalkoordinaten vorliegt. Vorteilhaft wird hierdurch die Auslegung insbesondere der Federkonstante vereinfacht, da in entkoppelten Koordinaten die jeweilige Komponente der Federkonstante angepasst werden kann. Dieses Verfahren lässt sich auch auf die Auslegung einer Dämpfungskonstante übertragen, sofern eine solche in der Impedanzregelung vorgesehen ist.

Gemäß einer weiteren vorteilhaften Ausführungsform erfolgt das Auslenken des Referenzpunktes des Robotermanipulators von der Nulllage in die ausgelenkte Lage durch manuelles Führen des Robotermanipulators durch einen Anwender.

Gemäß einer weiteren vorteilhaften Ausführungsform erfolgt das Auslenken des Referenzpunktes des Robotermanipulators von der Nulllage in die ausgelenkte Lage durch entsprechendes Ansteuern von Aktuatoren des Robotermanipulators.

Gemäß einer weiteren vorteilhaften Ausführungsform Robotermanipulators werden die Schritte des Auslenkens des Referenzpunktes, des Erfassens der zweiten ermittelten Auslenkung, sowie des Anpassens der Federkonstante der Impedanzregelung, für eine Vielzahl von verschiedenen Auslenkungsweiten und/oder in verschiedenen Auslenkungsrichtungen des Referenzpunktes des Robotermanipulators wiederholt und die Federkonstante abhängig von der jeweiligen Auslenkungsweite und/oder Auslenkungsrichtung angepasst. Diese Ausführungsform berücksichtigt insbesondere die Tatsache, dass typischerweise die Fehler und Ungenauigkeiten in den Gelenkwinkelsensoren des Robotermanipulators auslenkungsabhängig und richtungsabhängig sind. Somit wird eine Datenreihe für verschiedene Steifigkeitsmatritzen über verschiedene Auslenkungsweiten bzw. verschiedene Auslenkungsrichtungen geschaffen und die Fehler und Ungenauigkeiten der Gelenkwinkelsensoren des Robotermanipulators verbessert ausgeglichen.

Es kann daher bereitgestellt werden ein Robotersystem mit einem Roboterarm und mit einer Steuereinheit, wobei die Steuereinheit zum Ausführen einer Impedanzregelung des Roboterarms ausgeführt ist, wobei die Impedanzregelung nach dem erfindungsgemäßen Verfahren kalibriert ist.

Das Robotersystem mit dem Roboterarm und mit der Steuereinheit kann dabei mit dem Robotermanipulator gemäß dem ersten Aspekt der Erfindung und dessen Ausführungsformen zusammenfallen. Das heißt, dass am gleichen Robotermanipulator, an dem das Verfahren zum Kalibrieren der Impedanzregelung ausgeführt wird, auch die angepasste Federkonstante und/oder die angepasste Dämpfungsmatrix verwendet werden können. Alternativ bevorzugt wird an einem ersten Robotermanipulator das Verfahren zum Kalibrieren der Impedanzregelung ausgeführt, und an einem zweiten oder an einer Vielzahl von zweiten Robotermanipulatoren (das heißt dem jeweiligen Robotersystem mit dem Roboterarm und der jeweiligen Steuereinheit) eine derart kalibrierte Impedanzregelung verwendet werden. Vorteilhaft ist damit der das Ergebnis des Kalibrierens von einem Robotermanipulator auf ein Robotersystem mit einem Roboterarm und einer Steuereinheit auch übertragbar.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:

Fig. 1     ein Verfahren gemäß einem Ausführungsbeispiel der Erfindung,

Fig. 2     einen Robotermanipulator, an dem das Verfahren gemäß der Fig. 1 ausgeführt wird, und

Fig. 3     ein Robotersystem mit einem Roboterarm gemäß einem weiteren Ausführungsbeispiel der Erfindung.

Die Darstellungen in den Figuren sind schematisch und nicht maßstäblich.

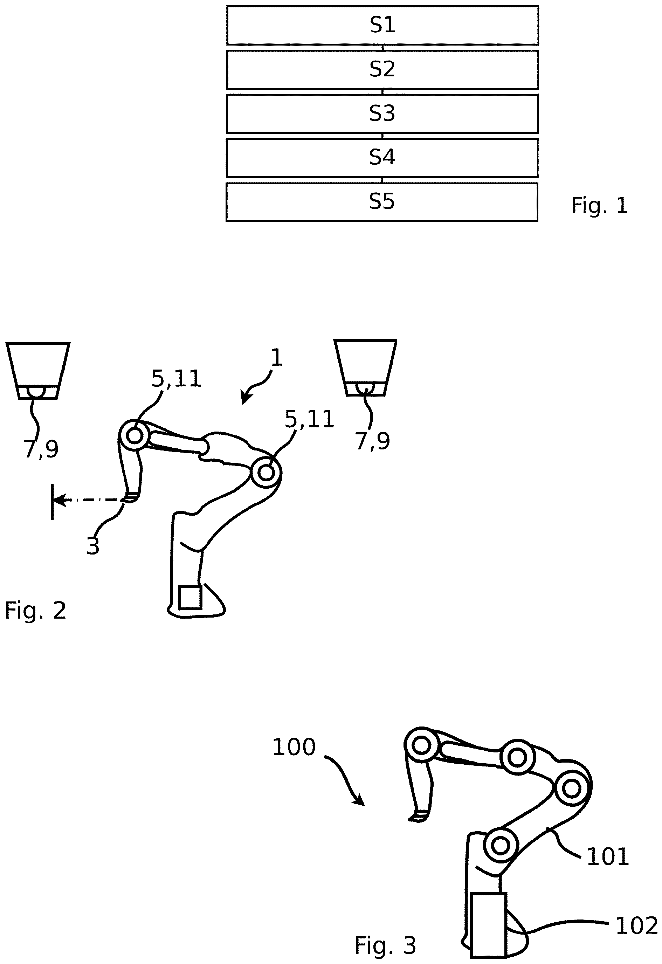

Fig. 1 zeigt ein Verfahren zum Kalibrieren einer Impedanzregelung eines Robotermanipulators 1, wobei der Robotermanipulator 1 eine Vielzahl von durch Gelenke miteinander verbundenen Gliedern aufweist. In einem ersten Schritt erfolgt das Auslenken S1 eines Referenzpunktes 3 an einem Endeffektor des Robotermanipulators 1 von einer Nulllage in eine ausgelenkte Lage. Der Robotermanipulator 1 wird dabei manuell geführt, und die Aktuatoren 11 erzeugen dabei einen Gegenkraft gegen die Auslenkung. Naturgemäß verbleibt dabei zumindest kurzzeitig vor dem Loslassen des Robotermanipulators 1 der Referenzpunkt 3 in einer Ruhestellung, ohne eine Geschwindigkeit aufzuweisen. In dieser Ruhestellung wird die jeweilige Auslenkung erfasst. Die Gegenkraft des Robotermanipulators 1 wird durch eine Impedanzregelung erzeugt, die eine Federkonstante in Form einer Diagonalmatrix aufweist, sowie von der Höhe einer ersten ermittelten Auslenkung des Referenzpunktes 3 des Robotermanipulators. Die erste ermittelte Auslenkung wird auf Basis von mittels Gelenkwinkelsensoren 5 des Robotermanipulators 1 erfassten Gelenkwinkeln ermittelt. Die gleiche Auslenkung wird außerdem in einem weiteren Schritt S2 als zweite ermittelte Auslenkung des Referenzpunktes 3 des Robotermanipulators 1 in seiner ausgelenkten Lage erfasst S2. Dies erfolgt mittels einer externen Positionsmesseinheit 7, die mehrere Kameras umfasst. Schließlich folgt in einem weiteren Schritt das Anpassen S3 der Federkonstante der Impedanzregelung so, dass die durch den Robotermanipulator 1 aufgebrachte Gegenkraft einer vorgegebenen Gegenkraft des Robotermanipulators 1 auf Basis der zweiten ermittelten Auslenkung entspricht. Die angepasste Federkonstante wird der Position des Referenzpunktes 3 des Robotermanipulators 1 in seiner Nulllage zugeordnet und mit der Zuordnung abgespeichert. Dabei werden die obigen Schritte für verschiedene Positionen des Referenzpunktes 3 des Robotermanipulators 1 jeweils in ihrer Nulllage wiederholt, woraus sich ein dreidimensionales Gitter von Positionen für den Referenzpunkt 3 des Robotermanipulators 1 in seiner jeweiligen Nulllage ergibt, wobei für jeden der Gitterpunkte eine eigens angepasste Federkonstante zur Verfügung steht. Beim Loslassen des Robotermanipulators 1 bewegt sich dieser durch die Gegenkraft der Aktuatoren 11 in seine Nulllage in einer gedämpften Bewegung zurück. Für die Anpassung der Dämpfungskonstante analog der Federkonstante, die zum Erreichen eines aperiodischen Grenzfalls der homogenen Lösung der als Differenzialgleichung formulierten Impedanzregelung gewählt wird, erfolgt das Ermitteln S4 einer Geschwindigkeit des Referenzpunktes 3 des Robotermanipulators 1 an einem Ort des noch ausgelenkten Referenzpunktes 3 während seiner Zurückpendelns in die Nulllage mittels der externen Geschwindigkeitsmesseinheit 9, die der Positionsmesseinheit 7 entspricht und die zeitliche Ableitung des gemessenen zeitlichen Positionsverlaufs des Referenzpunktes 3 des Robotermanipulators 1 erzeugt. Hierauf folgt das Anpassen S5 einer Dämpfungskonstante der Impedanzregelung so, dass die durch den Robotermanipulator 1 aufgebrachte Gegenkraft einer vorgegebenen Gegenkraft des Robotermanipulators 1 auf Basis der an dem Ort beim Zurücklaufen zweiten ermittelten Auslenkung und auf Basis der an diesem Ort ermittelten Geschwindigkeit entspricht.

Fig. 2 zeigt einen Robotermanipulator 1, an dem das Verfahren gemäß der Fig. 1 ausgeführt wird. Die Schritte des Verfahrens werden daher nicht wiederholt, stattdessen wird auf die Beschreibung der Fig. 1 verwiesen. Darin werden auch die gezeigten Komponenten und Einheiten erläutert.

Fig. 3 zeigt ein Robotersystem 100 mit einem Roboterarm 101 und mit einer Steuereinheit 102, wobei die Steuereinheit 102 zum Ausführen einer Impedanzregelung des Roboterarms 101 ausgeführt ist, wobei die Impedanzregelung nach dem Verfahren nach Fig. 1 für den Robotermanipulator 1 nach Fig. 2 kalibriert ist. Der Anwender des Robotersystems 100 kann dabei optional die dem dreidimensionalen Gitter von Positionen für den Referenzpunkt 3 zugeordnete Datenreihe der kalibrierten Federkonstante und die kalibrierte Dämpfungskonstante an der Steuereinheit 102 des Roboterarms 101 einlesen und anwenden. Dies ist für eine Vielzahl von Robotersystemen 100 mit einem jeweiligen Roboterarm 101 und mit einer jeweiligen Steuereinheit 102 möglich, aber exemplarisch an nur einem einzigen Robotersystem 100 in der Fig. 3 gezeigt.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehende Erläuterungen in der Beschreibung, definiert wird.

Bezugszeichenliste

1     Robotermanipulator
3     Referenzpunkt
5     Gelenkwinkelsensoren
7     externe Positionsmesseinheit
9     externe Geschwindigkeitsmesseinheit
11    Aktuatoren
100   Robotersystem
101   Roboterarm
102   Steuereinheit

S1    Auslenken
S2    Erfassen
S3    Anpassen
S4    Ermitteln
S5    Anpassen

## Patentansprüche

**1.** Verfahren zum Kalibrieren einer Impedanzregelung eines Robotermanipulators (1), wobei der Robotermanipulator (1) eine Vielzahl von durch Gelenke miteinander verbundenen Gliedern aufweist, aufweisend die Schritte:

- Auslenken (S1) eines Referenzpunktes (3) des Robotermanipulators (1) von einer Nulllage in eine ausgelenkte Lage, wobei der Robotermanipulator (1) eine von einer Federkonstante der Impedanzregelung und von einer ersten ermittelten Auslenkung des Referenzpunktes (3) des Robotermanipulators (1) abhängige Gegenkraft aufbringt, wobei die erste ermittelte Auslenkung auf Basis von mittels Gelenkwinkelsensoren (5) des Robotermanipulators (1) erfassten Gelenkwinkeln ermittelt wird,
- Erfassen (S2) einer zweiten ermittelten Auslenkung des Referenzpunktes (3) des Robotermanipulators (1) in seiner ausgelenkten Lage mittels einer externen Positionsmesseinheit (7), und **gekennzeichnet durch** den Schritt
- Anpassen (S3) der Federkonstante der Impedanzregelung so, dass die durch den Robotermanipulator (1) aufgebrachte Gegenkraft einer vorgegebenen Gegenkraft des Robotermanipulators (1) auf Basis der zweiten ermittelten Auslenkung entspricht.

**2.** Verfahren nach Anspruch 1,
wobei nach dem Auslenken des Referenzpunktes (3) des Robotermanipulators (1) von der Nulllage in die ausgelenkte Lage der Referenzpunkt (3) des Robotermanipulators (1) in der ausgelenkten Lage gehalten wird und das Erfassen der zweiten ermittelten Auslenkung während des Haltens des Referenzpunktes (3) des Robotermanipulators (1) in der ausgelenkten Lage erfolgt, und wobei das Anpassen der Federkonstante der Impedanzregelung so erfolgt, dass die durch den Robotermanipulator (1) aufgebrachte Gegenkraft einer stationären Gegenkraft des Robotermanipulators (1) auf Basis der zweiten Auslenkung entspricht.

**3.** Verfahren nach einem der vorhergehenden Ansprüche,
weiterhin aufweisend die Schritte:

- Ermitteln (S4) einer Geschwindigkeit des Referenzpunktes (3) des Robotermanipulators (1) an zumindest einem Ort der Auslenkung mittels einer externen Geschwindigkeitsmesseinheit (9), und
- Anpassen (S5) einer Dämpfungskonstante der Impedanzregelung so, dass die durch den Robotermanipulator (1) aufgebrachte Gegenkraft einer vorgegebenen Gegenkraft des Robotermanipulators (1) auf Basis der zweiten ermittelten Auslenkung und auf Basis der ermittelten Geschwindigkeit entspricht.

**4.** Verfahren nach einem der Ansprüche 1 bis 3,
wobei die Federkonstante über die Auslenkung des Referenzpunktes (3) zwischen seiner Nulllage und seiner ausgelenkten Lage konstant ist.

**5.** Verfahren nach einem der Ansprüche 1 bis 3,
wobei die Federkonstante von der aktuellen Auslenkung des Referenzpunktes (3) des Robotermanipulators (1) abhängig ist.

**6.** Verfahren nach einem der vorhergehenden Ansprüche,
wobei das Anpassen der Federkonstante der Impedanzregelung in Modalkoordinaten erfolgt.

**7.** Verfahren nach einem der Ansprüche 1 bis 6,
wobei das Auslenken des Referenzpunktes (3) des Robotermanipulators (1) von der Nulllage in die ausgelenkte Lage durch manuelles Führen des Robotermanipulators (1) durch einen Anwender erfolgt.

**8.** Verfahren nach einem der Ansprüche 1 bis 6,
wobei das Auslenken des Referenzpunktes (3) des Robotermanipulators (1) von der Nulllage in die ausgelenkte Lage durch entsprechendes Ansteuern von Aktuatoren (11) des Robotermanipulators (1) erfolgt.

**9.** Verfahren nach einem der vorhergehenden Ansprüche,
wobei die Schritte des Auslenkens des Referenzpunktes (3) des Robotermanipulators (1), des Erfassens der zweiten ermittelten Auslenkung sowie des Anpassens der Federkonstante der Impedanzregelung, für eine Vielzahl von verschiedenen Auslenkungsweiten und/oder in verschiedenen Auslenkungsrichtungen des Referenzpunktes (3) des Robotermanipulators (1) wiederholt werden und die Federkonstante abhängig von der jeweiligen Auslenkungsweite und/oder Auslenkungsrichtung angepasst wird.

**Claims**

**1.** Method for calibrating an impedance control system of a robotic manipulator (1), wherein the robotic manipulator (1) comprises a plurality of links connected by joints, comprising the steps:

- deflection (S1) of a reference point (3) of the robot manipulator (1) from a zero position to a deflected position, wherein the robot manipulator (1) applies a counterforce that depends on a spring constant of the impedance control system and on a first determined deflection of the reference point (3) of the robot manipulator (1), wherein the first determined deflection is determined on the basis of joint angles detected by means of joint angle sensors (5) of the robot manipulator (1),
- detection (S2) of a second determined deflection of the reference point (3) of the robot manipulator (1) in its deflected position by means of an external position measuring unit (7), and **characterized by** the step
- adapting (S3) the spring constant of the impedance control system so that the counterforce applied by the robot manipulator (1) corresponds to a specified counterforce of the robot manipulator (1) on the basis of the second determined deflection.

**2.** The method according to Claim 1, wherein, after the deflection of the reference point (3) of the robot manipulator (1) from the zero position to the deflected position, the reference point (3) of the robot manipulator (1) is held in the deflected position, and the detection of the second determined deflection occurs while maintaining the reference point (3) of the robot manipulator (1) in the deflected position, and wherein the adjustment of the spring constant of the impedance control system is carried out in such a way that the counterforce applied by the robot manipulator (1) corresponds to a stationary counterforce of the robot manipulator (1) based on the second deflection.

**3.** The method according to any one of the preceding claims, furthermore, comprising the steps:

- determination (S4) of a velocity of the reference point (3) of the robot manipulator (1) at at least one location of deflection by means of an external velocity measuring unit (9), and
- adapting (S5) a damping constant of the impedance control system in such a way that the counterforce applied by the robot manipulator (1) corresponds to a given counterforce of the robot manipulator (1) on the basis of the second determined deflection and on the basis of the determined speed.

**4.** The method according to any one of claims 1 to 3, where the spring constant is continuously over the deflection of the reference point (3) between its zero position and its deflected position.

**5.** The method according to any one of the Claims 1 to 3, wherein the spring constant depends on the current deflection of the reference point (3) of the robot manipulator (1).

6. The method according to one of the preceding claims, wherein the adaptation of the spring constant of the impedance control system is carried out in modal coordinates.

7. The method according to any one of the Claims 1 to 6, wherein the deflection of the reference point (3) of the robot manipulator (1) from the zero position to the deflected position is carried out by manual guidance of the robot manipulator (1) by a user.

8. The method according to any one of the Claims 1 to 6, wherein the deflection of the reference point (3) of the robot manipulator (1) from the zero position to the deflected position is carried out by corresponding control of actuators (11) of the robot manipulator (1).

9. The method according to any one of the preceding claims, wherein the steps of deflection of the reference point (3) of the robot manipulator (1), the detection of the second determined deflection and the adaptation of the spring constant of the impedance control system, are repeated for a plurality of different deflection widths and/or in different deflection directions of the reference point (3) of the robot manipulator (1), and the spring constant is adapted depending on the respective deflection width and/or deflection direction.

**Revendications**

1. Procédé d'étalonnage d'un réglage d'impédance d'un manipulateur de robot (1), sachant que le manipulateur de robot (1) comporte une pluralité d'organes reliés entre eux par des articulations, comportant les étapes de :

   - orientation (S1) d'un point de référence (3) du manipulateur de robot (1) d'une position zéro à une position orientée, sachant que le manipulateur de robot (1) applique une force opposée dépendante d'une constante de rappel du réglage d'impédance et d'une première orientation déterminée du point de référence (3) du manipulateur de robot (1), sachant que la première orientation déterminée est déterminée sur la base d'angles d'articulation saisis au moyen de capteurs d'angles d'articulation (5) du manipulateur de robot (1),
   - saisie (S2) d'une deuxième orientation déterminée du point de référence (3) du manipulateur de robot (1) dans sa position orientée au moyen d'une unité de mesure de position externe (7) et **caractérisé par** l'étape
   - d'adaptation (S3) de la constante de rappel du réglage d'impédance de telle manière que la force opposée appliquée par le manipulateur de robot (1) correspond à une force opposée prédéfinie du manipulateur de robot (1) sur la base de la deuxième orientation déterminée.

2. Procédé selon la revendication 1, sachant qu'après l'orientation du point de référence (3) du manipulateur de robot (1) de la position zéro à la position orientée, le point de référence (3) du manipulateur de robot (1) est maintenu dans la position orientée et la saisie de la deuxième orientation déterminée a lieu pendant le maintien du point de référence (3) du manipulateur de robot (1), dans la position orientée et sachant que l'adaptation de la constante de rappel du réglage d'impédance a lieu de telle manière que la force opposée appliquée par le manipulateur de robot (1), correspond à une force opposée stationnaire du manipulateur de robot (1) sur la base de la deuxième orientation.

3. Procédé selon l'une quelconque des revendications précédentes, comprenant en plus les étapes de :

   - détermination (S4) d'une vitesse du point de référence (3) du manipulateur de robot (1) à au moins un endroit de l'orientation au moyen d'une unité de mesure de vitesse externe (9), et
   - adaptation (S5) d'une constante d'amortissement du réglage d'impédance de telle manière que la force opposée appliquée par le manipulateur de robot (1) correspond à une force opposée prédéfinie du manipulateur de robot (1) sur la base de la deuxième orientation déterminée et sur la base de la vitesse déterminée.

4. Procédé selon l'une quelconque des revendications 1 à 3, sachant que la constante de rappel est constante sur l'orientation du point de référence (3) entre sa position zéro et sa position orientée.

5. Procédé selon l'une quelconque des revendications 1 à 3, sachant que la constante de rappel dépend de l'orientation actuelle du point de référence (3) du manipulateur de robot (1).

6. Procédé selon l'une quelconque des revendications précédentes, sachant que l'adaptation de la constante de rappel du réglage d'impédance a lieu dans les coordonnées modales.

7. Procédé selon l'une quelconque des revendications 1 à 6, sachant que l'orientation du point de référence (3) du manipulateur de robot (1) de la position zéro à la position orientée a lieu par guidage manuel du manipulateur de robot (1) par un opérateur.

8. Procédé selon l'une quelconque des revendications 1 à 6, sachant que l'orientation du point de référence (3) du manipulateur de robot (1) de la position zéro à la position orientée a lieu par l'activation correspondante d'actionneurs (11) du manipulateur de robot (1).

9. Procédé selon l'une quelconque des revendications précédentes, sachant que les étapes d'orientation du point de référence (3) du manipulateur de robot (1), de saisie de la deuxième orientation déterminée ainsi que de l'adaptation des constantes de rappel du réglage d'impédance pour une pluralité de distances d'orientation différentes et/ou dans différentes directions d'orientation du point de référence (3) du manipulateur de robot (1) sont répétées et la constante de rappel est adaptée en fonction de la distance d'orientation respective et/ou de la direction d'orientation.

| S1 |
|----|
| S2 |
| S3 |
| S4 |
| S5 |

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2004223663 A

- EP 3352951 A1